# EUROPEAN PATENT SPECIFICATION

(11) **EP 1 467 861 B1**
(45) Date of publication and mention of the grant of the patent: **14.05.2008**
(21) Application number: 03703943.5
(22) Date of filing: 23.01.2003
(51) Int. Cl.: B32B 21/10

(54) **FIRE AND SMOKE RESISTANT PANELS AND LAMINATES FOR VEHICLES AND METHOD OF MANUFACTURE**
FEUER- UND RAUCHFESTE PLATTEN UND LAMINATE FÜR FAHRZEUGE UND HERSTELLUNGSVERFAHREN
PANNEAUX RESISTANT AUX FLAMMES ET A LA FUMEE ET STRATIFIES POUR VEHICULES AINSI QUE PROCEDE DE FABRICATION

(30) Priority: 23.01.2002 US 350016 P
(43) Date of publication of application: 20.10.2004
(73) Proprietor: Hexion Specialty Chemicals, Inc., Columbus OH 43215 (US)
(72) Inventor: TAYLOR, John, Gerard, Jeffersonville, IN 47130 (US); MALHOTRA, Vinay, Louisville, KY 40220 (US)
(74) Representative: Knowles, James Atherton
(86) International application number: PCT/US2003/001832
(87) International publication number: WO 2003/061964

(56) References cited:
- EP-A- 0 575 722
- EP-A- 0 988 967
- US-A- 3 897 589
- US-A- 4 012 561
- US-A- 4 852 316
- US-B1- 6 271 156
- US-B1- 6 523 324

## Description

### 1. Field of the Invention

This invention relates to a method for forming a decorative panel, specifically for use in an airplane or other transportation means, which may include a honeycomb structure, coated with a co-cured composition comprising a melamine-formaldehyde (MF) resin and a phenol-formaldehyde (PF) resin. The panels of the invention have shown, in addition to their low weight and low surface porosity, a degree of fire and smoke resistance generally desired inside a transportation means.

### 2. Background

Interior panels for use on airplanes and other transportation means common in the art are generally produced to meet flame and smoke resistance requirements while providing aesthetic appeal. Therein, a method is provided whereby a material is coated and/or laminated to the surface of a phenolic composite panel to improve aesthetic appeal and surface quality. Such panels are conventionally covered with a decorative laminate or with a gel or paint coat in order to hide the unsightly appearance of the panel.

Conventionally, one type of aircraft interior panel is made using a honeycomb core that has been coated with a phenolic resin and cured. The honeycomb core is laminated on either side with a phenolic pre-preg , and the assembly is then cured to produce a sandwich panel. However, the cured phenolic panel is dark in color and exhibits surface porosity, requiring that a polyvinyl fluoride decorative laminate be applied to the surface to improve the appearance. Panels used for the conventional interior of other transportation means may also require the application of a decorative laminate, gel coat or highly filled phenolic paste which must then be painted to provide aesthetic appeal. Unfortunately, the decorative laminate, paint or gel coat compromises the inherent flame and smoke resistance properties of the panel.

EP-A-0 988 967 discloses decorative laminates and multilayer decorative laminates having a patterned depth appearance.

US-A-4012561 discloses decorative laminates and core stock paper for use in decorative laminates which may be news-print, newsprint pulp, recycled waste newspaper or re-pulped newsprint.

EP-A-0575722 discloses a decorative high-pressure laminate which is intended for use as a floor covering.

US-A-3 897 589 discloses a laminate and a method of making it.

In order to avoid painting the panels, it is common in the art to now utilize a decorative laminate layer of a sandwich of polyvinyl fluoride layers, such as TEDLAR from E.I. du Pont of Wilmington, Delaware.

However, polyvinyl fluoride containing panels have a number of disadvantages for use in aircraft panels. Most importantly, panels including polyvinyl fluoride generally cause the resulting panel to have a high smoke density, as measured by optical density of the smoke produced from heating the panel. Additionally, due to the physical density, panels made polyvinyl fluoride are generally heavy. Moreover, the adhesives often used to affix the polyvinyl fluoride decorative laminates often contribute to both smoke density and higher heat release values as measured by the OSU Heat Release Test. Finally, application of the polyvinyl fluoride laminate requires another step in the manufacturing process. The extra manufacturing steps, high weights and high smoke density associated with polyvinyl fluoride laminates are not considered desirable in an aircraft or other transportation means and vehicles.

Therefore, there exists a need in the transportation industry for a lightweight panel that can be produced with fewer processing steps and thus at a reduced cost in a shorter time, which does not produce dense smoke upon heating and retains fire resistance.

### Summary of the Invention

A lightweight, smoke and fire resistant panel and method of fabrication are provided which is constructed from a honeycomb structure, onto which a phenolic laminate and a melamine laminate are applied and co-cured, such that the panel is both lightweight as well as fire and smoke resistant, in addition to a method of fabrication. The present inventors have discovered that because melamine resin can be co-cured with a phenolic resin, they can produce a panel in a single step, comprising a co-cured melamine-phenolic resin that would feature a lightweight panel with high smoke and fire resistance properties. By associating a decorative element, such as a sheet or other fibrous material with the melamine resin, an aesthetic pore-free surface can be achieved without sacrificing smoke and fire resistance.

The panel of the invention further complies with present FAA requirements relating to OSU heat release and optical density for smoke generated from testing, as measured per ASTM E-662. Such requirements are provided in Chapter 49 of the United States Code and Title 14 of the Code of Federal Regulations, and the rules promulgated therefore.

Panels formed from a structural material such as a honeycomb, and a co-cured laminate layer of melamine resin and a phenolic resin have been shown to have excellent heat release and smoke generation properties, as well as reduced weight. These characteristics make such a panel desirable for use as decorative panels in the transportation industry.

Generally, the panel of the invention includes a structural component in addition to a melamine resin and a phenolic resin. The structural component includes a honeycomb, to give the remainder of the components a reinforcing surface.

### Brief Description of the Drawings

Figure 1 is a transverse cross-section of a two-layer panel in accordance with the invention.
Figure 2 is a transverse-cross section of a modified two-layer panel in accordance with the invention.
Figure 3 is a transverse cross-section of a three-layer panel in accordance with the invention.
Figure 4 is a transverse cross-section of a second modified-two layer panel in accordance with the invention.
Figure 5 is a transverse cross-section of a third modified-two layer panel in accordance with the invention.

### Detailed Description of the Preferred Embodiments

The panels previously used in vehicles do have the fire and smoke resistance presently required by the Federal Aviation Administration (FAA), while simultaneously exhibiting an aesthetically appealing surface. However, the FAA is considering stricter requirements, and aircraft manufacturers are interested in cost savings derived from lower weights and shorter process times. As described above, the panels comprising a phenolic resin, which do have significant smoke and fire resistance, are dark in color.

To achieve an appealing appearance, decorative laminates or gel coatings have been applied to the unappealing cured phenolic surface, but result in diminishing the fire and smoke resistance of the panel, while simultaneously increasing its weight. Manufacture of the conventional panels additionally, involves a secondary preparation and bonding process, necessarily adding to production time and cost. Accordingly, such panels are considered deficient in regard to those characteristics for application in aircraft and other vehicle production.

Accordingly, the present inventors have discovered that a structural panel may be produced by co-curing a melamine resin and phenolic resin to a honeycomb to produce a visually appealing panel, having superior heat release and smoke density properties. Because the melamine resin results in a clear surface when cured, any decorative element or material may be placed either between the phenolic resin and the melamine resin or within the melamine resin to hide the dark cured phenolic resin from view. Additionally, the properties of the melamine resin are such that when cured, the surface of the panels is hard, while being scuff and mar resistant.

As for the decorative material, a wide variety of materials are suitable. However, paper overlays are preferred. Most preferred, is using a melamine pre-preg including a fine, lightweight, woven or non-woven glass structure. Additionally, any conventional pre-preg currently being used for vehicle interiors may be utilized with melamine, according to this invention.

The phenolic resin used in accordance with the invention comprises a resole, having a formaldehyde to phenol ratio of at least 1. However, any type of phenolic resin may be used in accordance with the invention, including, for example, novolac resins and resole-novolac blends. Other examples may include a phenol-melamine-formaldehyde (PMF) resin in place of the PF resin, which better co-cures with the melamine resin layer. A preferred phenolic resin comprises a sodium hydroxide catalyzed phenolic resole in methanol with a formaldehyde to phenol ratio of 1.25:1 condensed to a free monomer content of less than 20% free phenol and containing between 1 and 5% free formaldehyde.

In a preferred embodiment, the above-described resin is formed into a fiber reinforced plastic FRP), such as when a liquid phenolic resin is combined with a glass fiber cloth which is then dried under prescribed conditions to obtain a pre-preg made to specific resin solids and flow specifications. The reinforcement is typically glass, but could be any other woven fabric or non-woven mat, including paper. Typical glass reinforcements include 7781 glass and KT CM1701-50, available from Owens Coming of Toledo, Ohio. Preferably, the FRP is at least partially cured pre-preg, but may, in the alternative, simply comprise the phenolic resin rolled onto a glass fiber backing, prior to being cured.

The outermost component of the coating on the structural member is a melamine resin. The melamine resin may be any melamine formulation, capable of being co-cured with the phenolic resin and are used to provide an excellent surface finish which is scuff and mar resistant and aesthetically pleasing. Preferably, the melamine resin is also formed into a FRP, most preferably, into a pre-preg, prior to being applied to the phenolic resin. The melamine pre-preg or FRP preferably provided on a glass fiber cloth which is then dried under prescribed conditions to obtain a pre-preg to specific resin solids and flow specification. The reinforcement is typically glass, but could be any other woven fabric or non-woven mat, including paper. Typical glass reinforcements include 7781 glass and KT CM1701-50, available from Owens Coming of Toledo, Ohio. Preferably, the FRP is at least partially cured pre-preg, but may, in the alternative, simply comprise the melamine resin rolled onto a glass fiber backing, prior to being cured.

Additives may be included with the melamine to, for example, improve manufacturing process of the melamine and/or the panels and laminates of the invention. Such typical additives include wetting agents, flow modifiers, internal release agents, acids, acrylic emulsions and coloring agents.

Preferably, the melamine resin 30 includes a decorative agent or colorant, such as titanium dioxide (TiO₂) or zinc oxide (ZnO₂), in a suspension to obtain a white color on the glass member 80. Preferably, a 70% or higher dispersion (or solution) of the colorant in water is sufficient to give coverage to hide the dark color of the phenolic resin or pre-preg.

The most expensive function in making panels is eliminating the porous surface of the cured phenolic glass laminate. Heretofore, a filler was applied to the porous surface and sanded in a process known as "sand and sweep". The process is repeated many times until an acceptable finish is realized. A melamine overlay has the potential to eliminate this step while providing the desired clear structure to show any decorative elements therein, and improving the flame and smoke properties relative to the previously described decorative laminates.

An example of a suitable MF resin is described herein. However, other variants may be obvious to one of ordinary skill in the art, and can be employed without departing from the spirit of the invention. For example, any resins having 50-60% solids; or a formaldehyde to melamine mole ratio of 1.25 - 2.5, preferably 1.4-1.8 have produced positive results. Additionally, a solvent, preferably mostly water, may or may not include sugars, such as sucrose, or diethylene glycol, while the resin may contain other modifiers, such as dicyandiamide or caprolactam to aid in post-formability.

A preferred melamine resin comprises approximately 60% by weight of nonvolatile components, having a formaldehyde to melamine molar ratio of 1.5 to 2.5, preferably, approximately 1.7. The solvent used therein is optionally, approximately 5% sucrose, 10% diethylene glycol and 85% water, by weight.

The phenolic resin to be use in the present invention is preferably selected to exhibit certain properties. In particular, sufficient rheology is desired in the face of the honeycomb structure, such that the resin reticulates with the honeycomb to form a sandwich panel. When the phenolic resin is applied to the honeycomb structure, the flow of the resin is subjected to enough internal resistance to form a bead structure about the honeycomb aperture. Accordingly, any resin pre-preg, such as one formed from a cyannate ester, which exhibits the described rheology may be used in place of the phenolic resin. Additionally, it is considered within the scope of the invention to eliminate the phenolic (or cyannate ester) resin and use only the melamine resin.

It must be noted that the melamine resin and phenolic resin FRP may be provided in a variety of states. For example, the melamine resin may be provided in a pre-preg and partially cured, or in a B-stage, to be press-cured with the phenolic FRP. Alternatively, the phenolic FRP, preferably a pre-preg, may be partially cured to the honeycomb prior to application and press-curing of the B-staged melamine pre-preg. Accordingly, a phenolic glass laminate, as used herein, refers to a structure comprising a partially cured phenol resin, with glass fibers imbedded therein. A pre-preg is often desired over other FRP forms, because the resin can be B-staged, producing a bendable tacky structure. The B-staged pre-preg can be rolled for storage and ease of use later on. Additionally, the melamine resin may be sprayed, in liquid form, directly onto the phenolic resin or decorative element.

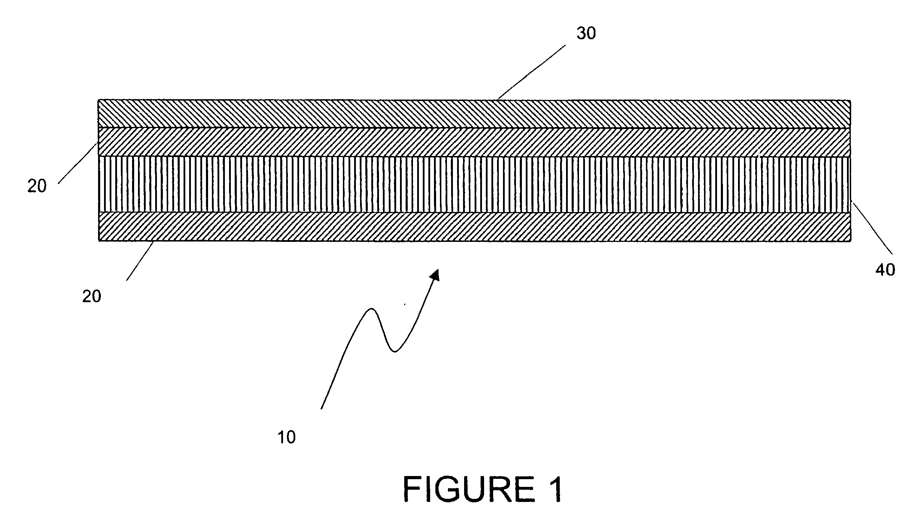

Fig. 1 shows a first embodiment of the invention. The panel of this embodiment is a two-layer panel 10 including a co-cured layer of a single coating of phenolic resin pre-preg 20 and melamine resin 30 (or melamine pre-preg, such as an overlay) on top of a structural member 40, as shown in Fig. 1. Essentially, the panel 10 has a layer of structural member 40 with layers of the phenolic resin 20 on both sides and with the melamine resin 30 applied on top of one of the phenolic members, such that the co-cured coatings form a single inseparable panel. Optionally, melamine resin 30 may include at least one decorative element, such as a thin non-woven fibrous sheet, as described herein.

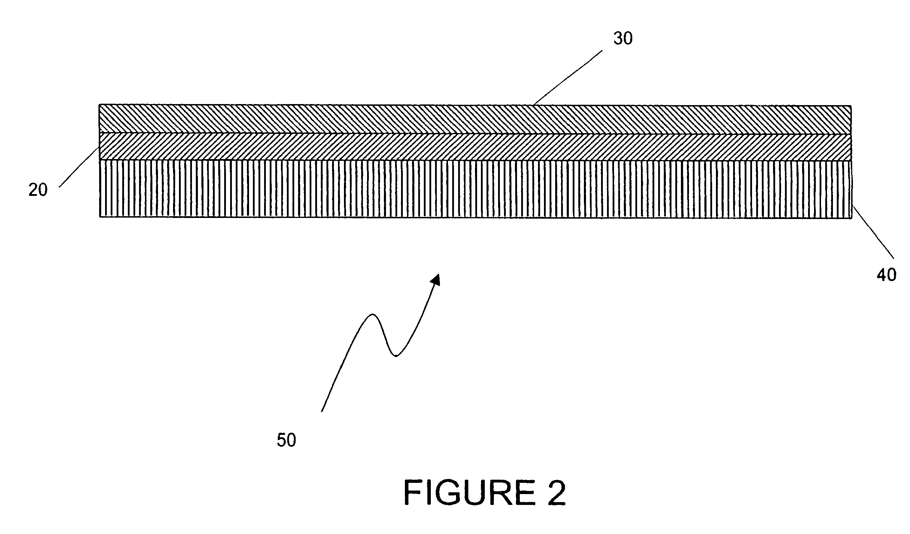

In an alternative embodiment, as shown in Fig. 2, a modified two-layer 50 panel is produced. Phenolic resin 20 is only applied to one surface of structural member 40. Accordingly, melamine resin 30 is then applied to the single phenolic resin 20 layer.

The structural member 40 may be a lightweight, substantially porous member, of strength sufficient to withstand the pressures and temperatures of curing. It preferably is a honeycomb. NOMEX, from E.I. du Pont of Wilmington, Delaware, is most preferred for the honeycomb.

To form the panel of the invention, structural member 40, such as a honeycomb, is sandwiched between two layers of phenolic resin FRP and placed in a heated press. If the phenolic resin FRP is uncured, the phenolic resin may be partially cured or completely cured to the structural member to a form a honeycomb-phenolic resin structural member composite.

Once the phenolic resin has been applied, the melamine resin is added. Again, the melamine is preferably provided in the form of a FRP, wherein a liquid melamine is first applied to a fibrous or other structure providing member. It is this fibrous or structure providing member, which, preferably, is associated with a decorative element. For example, a decorative sheet may be provided inside or adjacent to a melamine resin or melamine resin pre-preg or may simply be laid over the phenolic resin prior to addition of the melamine resin. Most preferably, the melamine resin has been partially cured to from a pre-preg. Once the melamine resin is placed on top of the phenolic resin, the sandwich structure can be completely cured to form the panel of the invention. By curing or co-curing the melamine resin with the phenolic resin, the yellow to brown, or otherwise dark and non-aesthetic phenolic resin, can be hidden by the decorative elements associated with the pore-free cured melamine resin.

However, in a still further embodiment, the melamine pre-preg is situated adjacent to the phenolic pre-preg that was placed on one side of the honeycomb core. The melamine resin and the phenolic resin are co-cured in a heated press to form a unitary structure, which does not delaminate, as presented with reference to the Example, below.

When a panel of the invention is completed, it may be used as a structure in the interior cabin of a vehicle. Preferably, a sandwich panel, as described above, forms the walls visible from the inside of an aircraft cabin, bus, train, ship, or other transportation means. When the above-described panel is completed, it may be fastened directly to the skin of the vehicle, such that passengers inside see only the decorative element through the clear melamine resin.

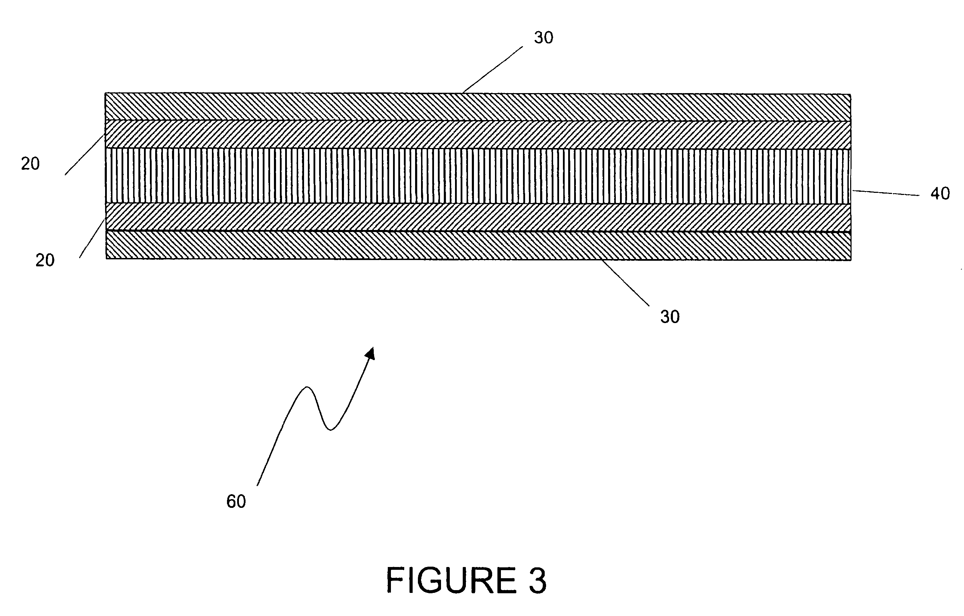

In a still further embodiment, a three-layer structure or panel 60 is formed, as shown in Fig. 3. Specifically, with the structural member 40 as the innermost component, the co-cured phenolic resin 20 and melamine resin 30 form the co-cured outermost structure. Just as with the two-layer structure, the phenolic resin 20 can be applied to the structural member 40 or honeycomb, and optionally or completely partially cured, before the melamine resin 30 is applied, and thereafter, the sandwich completely cured. However, in the three-layer structure, the melamine resin, preferably in the form of a pre-preg, is applied to both sides of the honeycomb-phenolic resin structure, resulting in a lightweight, fire and smoke resistant and pore-free panel. Again, any decorative elements are associated with the melamine resin layer. Additionally, any decorative elements may be associated with one or both layers of melamine resin. Such a panel may be used for other structures in the interior of the vehicle, such as aircraft barriers between first class and coach class seats and doors to areas such as the cockpit, bathrooms and galleys, or in any location a panel with two aesthetic sides is desired.

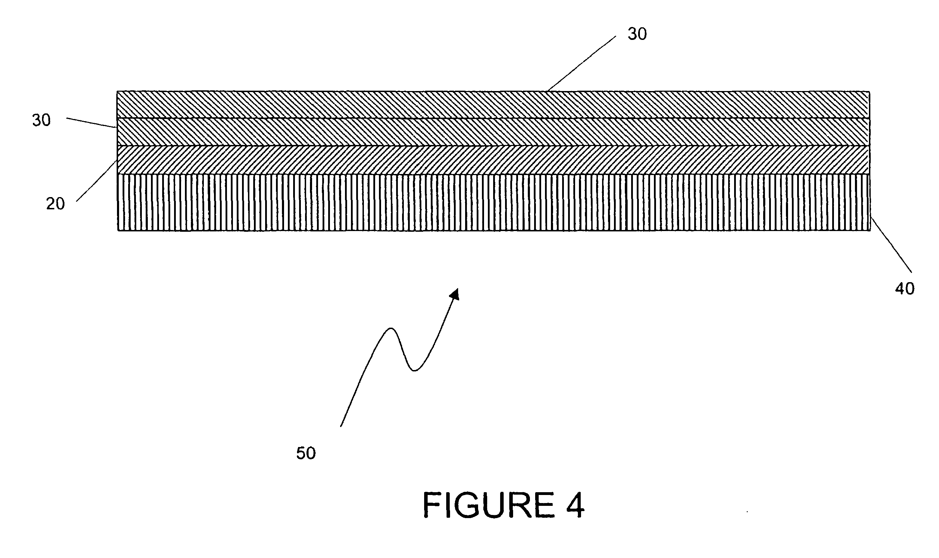

Figure 4 shows another modified two-layer structure 70 utilizing a second melamine resin 30' adjacent to the first melamine resin 30. Preferably, all three resin layers, i.e., the melamine resin 30, the second melamine resin 30' and the phenolic resin 20 are co-cured, however, it is considered within the scope of the invention to co-cure the melamine resin 30 and the phenolic resin 20 before application and cure of the second melamine resin 30'.

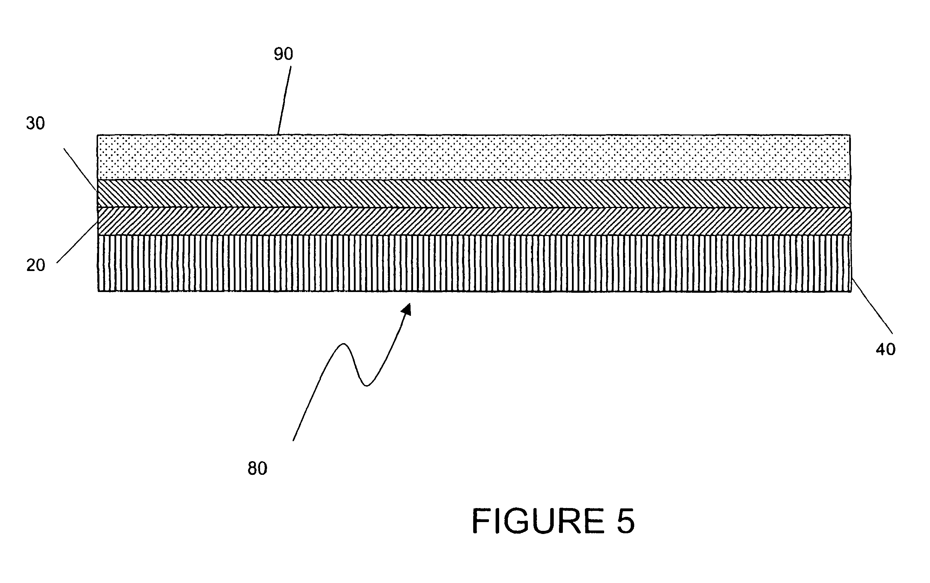

Figure 5 shows an additional modified two-layer structure 80 in accordance with the invention. Specifically, an uncoated glass structure 90 is placed upon one or more stacked piles of the melamine resin 30 which is atop the phenolic resin 20. Preferably, the glass structure 90 is provided before the resins are pressed together to form the panel.

The glass member 90 used in this embodiment may be any type of glass, including glass specialized for use in transportation. Typical glasses include conventional glasses used for interior and exterior aircraft parts, such 120 glass C5460. Any type of glass is suitable, however, preferably the glass is of significant thickness so as to prevent print through. Thus, the particular thickness of the glass member 90 is not restricted.

### Examples

### Example 1

A panel (Panel A) in accordance with the invention may be formed in the following manner. First, press and steel plates are preheated to 143°C (290°F). Layers of phenolic-glass laminate, honeycomb, a second phenolic-glass laminate and a melamine overlay are respectively placed on the bottom steel plate. The melamine overlay is a melamine pre-preg made with a cellulose substrate. Stop bars are placed on the bottom plate, on either side of the composite. A second steel plate is then placed on top of the composite. The sandwich panel is then completely cured at 143°C (290°F) and 2.1 MPa (300 psi) for 16 minutes. Stop bars are provided in the press to allow the honeycomb core to be only partially crushed and allow the pre-preg resin to flow into and cure to the honeycomb structure. The melamine and phenolic resin pre-pregs co-cure to each other and to the honeycomb core to produce an integrated structure.

### Conventional Panels

A conventional comparative panel (Panel B), including a phenolic resin (without the melamine resin) may be formed in the following manner, by first producing a conventional panel of phenolic resin alone. A single ply of phenolic laminate is placed on a heated steel plate onto which the honeycomb core is placed. A second single ply of phenolic laminate is then placed on the honeycomb core to form a sandwich structure. Stop bars and the second steel plate are situated and the entire assembly is pressed to completely cure the phenolic resin (approximately 16 minutes), as previously described.

### Alternative Embodiment

To form an additional panel (Panel C), the melamine overlay is added to a fully cured Panel B. In order to form a structure for comparison with the panel of the invention, a ply of melamine preg-preg is placed on the conventional panel (e.g., Panel B). An upper plate is placed on the structure with stop bars beneath. The structure is then press cured at 143°C (290°F) under 2.1 MPa (300 psi) for 1 minute, i.e. long enough to completely cure the melamine resin.

Both Panel A and Panel C show excellent properties upon initial examination. Both Panel A and Panel C exhibit clear surface which will show any decorative elements associated with the melamine resin to sufficiently obscure the dark color of the inner phenolic resin.

Panel A showed significant properties with respect to delamination. Because the melamine and phenolic resin are co-cured, it is not possible for the two components to separate from one another under mechanical pressure or simply due to the passage of time.

The inventors have further learned that a cured phenolic panel (e.g., Panel B) overlayed with a melamine pre-preg (Panel C) in an attempt to affix an additional melamine resin layer to the existing panel once the phenolic resin has been completely cured, while an improvement over conventional panels, is less advantageous than the co-cured phenolic resin/melamine resin panels (e.g, Panel A).

The method of the invention comprises forming the lightweight smoke and fire resistant panel for use in vehicles. In one embodiment, the phenolic pre-preg and melamine pre-preg are applied to only a single side of the honeycomb (Fig. 1). In a first step, the phenolic resin is formed into a pre-preg by being partially cured in the presence of a fibrous material, such as glass fibers to form a glass laminate pre-preg. Such a phenolic glass pre-preg is typically cured at 2.1 MPa (300 psi) at 143-152 °C (290-305 °F) for 10-16 minutes to form the sandwich panels.

Conventional phenolic resin panels (e.g., Panel B) do, despite their unattractive color, comply with current federal regulations, Chapter 49 of the United States Code and Title 14 of the Code of Federal Regulations, and the rules promulgated therefore, each of which is herein incorporated by reference. Therein, the Federal Aviation Administration (FAA) requires that aircraft interior panels have an OSU heat release of 65/65, meaning a peak heat release of 65 kw/m² and 65 km/m² total heat release. In support thereof, the heat release properties of three specimens fabricated as per Panel B were tested, and the data is provided in Table I, measured in accordance with standards described in the Code of Federal Regulations Title 14 part 25, revised as of January 1, 2001 with a radiant heat flux of 3.5 w/cm². The resulting data is given in Table I.

| TABLE I | | | |
|---|---|---|---|
| Specimen No. | Peak Heat Release (km/m²) | Time Noted (minutes:seconds) | Total Heat Release within First 2 Minutes (km/m²) |
| 1 | 14.95 | 2:52 | 10.89 |
| 2 | 16.07 | 2:34 | 16.05 |
| 3 | 22.13 | 2:18 | 10.53 |
| Average | 17.72 | -- | 12.49 |

Additionally, the above-mentioned FAA rules further describe a smoke density limit. Specifically, the present rules require a maximum of 200 Dmc (i.e., optical density) for smoke generated, as measured via ASTM E-662. Tests have shown that Panel B, i.e. a single ply of phenolic panel, results in a Dmc of 0.77 in the non-flaming mode and 7.93 in the flaming mode. Adding TEDLAR, as is commonly done in the art to hide the dark brown cured phenolic resin, raises the smoke density to a Dmc of between 150 and 200. Accordingly, adding a layer of TEDLAR to the phenolic resin composite greatly compromises the smoke toxicity attributes of the rest of the panel.

In contrast, the panels of the invention (e.g., Panel A) exhibit fire and smoke resistance properties that comply with current regulations of the Federal Aviation Administration of the United States government, as provided by Chapter 49 of the United States Code and Title 14 of the Code of Federal Regulations, and the rules promulgated therefore, each of which is herein incorporated by reference. Three samples manufactured as described above, and having an approximate average thickness of 0.5 inches, were manufactured and the heat release factors measured in accordance with the standards described in the Code of Federal Regulations Title 14 part 25, revised as of January 1, 2001 with a radiant heat flux of 3.5 w/cm². The resulting data is given in Table II.

| TABLE II | | | |
|---|---|---|---|
| Specimen No. | Peak Heat Release (km/m²) | Time Noted (minutes:seconds) | Total Heat Release within First 2 Minutes (km/m²) |
| 1 | 30.09 | 0:22 | 28.25 |
| 2 | 36.64 | 0:21 | 30.55 |
| 3 | 33.09 | 0:21 | 34.91 |
| Average | 33.27 | - | 31.24 |

The smoke density test was also performed on a single ply phenolic panel with a single ply of melamine pre-preg (Panel A). The results showed a Dmc of 18.66 in the non-flaming mode and 43.58 in the flaming mode.

### Example 2

The melamine resin used in Example 1 (1.7 mole ratio with a solvent of water/diethylene glycol and sucrose) to form the structure depicted in Fig. 1, using an acid catalyst and additives to improve flow, release and wet out was used with a 70% titanium dioxide in water suspension to give approximately 1.7% titanium dioxide, to give white color to the pre-preg to form the structure depicted in Fig. 5. The melamine resin solution was added to give approximately 38% resin solids on 7781 glass to form the melamine pre-preg. Press was conducted as in Example 1. The result was a panel with laminates that have excellent adhesion to each other and to the structure, which additionally hid the color of the phenolic pre-preg. However, the imprint from the honeycomb structure was visible through the panel.

### Example 3

The same components as in Example 2 were used, except the titanium dioxide was increased by 67% to about 2.9% titanium dioxide. No benefit was observed from increasing the titanium dioxide concentration over the level of Example 2.

### Example 4

The same components as in Example 2 were used, with an extra sheet of melamine pre-preg, co-cured with the first melamine pre-preg and phenolic resin. However, the inclusion of a second melamine resin layer was not sufficient to hide the honeycomb imprint.

### Example 5

The same components as in Example 2 were used, with one piece of uncoated glass veil of 120 glass C5460 atop the melamine pre-preg, before the curing step. However, use of the glass veil was not sufficient to hide the honeycomb imprint.

### Example 6

The same components as in Example 2 were used, except the melamine load on the 7781 glass was increased to 45% , i.e., the melamine resin solids was increased from 38% to 45% in the melamine pre-preg. However, this increase was not sufficient to hide the honeycomb imprint.

### Example 7

The same components as in Example 6 were used, with an additional layer of melamine pre-preg atop the phenolic resin. However, use of a second melamine pre-preg was not sufficient to hide the honeycomb imprint.

### Example 8

The same components as in Example 6 were used, except the 120 glass C5460 veil was used to make melamine pre-preg at 45% resin solids in glass. This was placed on top the melamine pre-preg with 7781 glass to produce a panel having 45% solids on 120 glass C5460 atop the panel of Example 2. However, this was not sufficient to hide the honeycomb imprint.

### Example 9

The same components as in Example 2 were used, except the phenolic pre-preg was mostly cured in making the panel before applying the melamine pre-preg overlay. In other words, the phenolic pre-preg was partially cured in the heated press (as per Panel B), except the cure time was reduced to one minute. While much of the print-through was obscured, the resulting panel suffered from delamination.

Thus from Examples 2-9 it can be seen that the print-through is not a function of the melamine resin, melamine resin content, or the titanium dioxide level, but of the glass substrate. While not wishing to be bound by any theory, the present inventors believe that the glass fibers spread under pressure, allows the design of the honeycomb structure to show through the cured resins. However, this was not seen with cellulosic substrates. As a result, Examples 10-12 were conducted to determine a suitable glass substrate to substitute for the 7781 glass in the melamine pre-preg. These Examples show that KT CM1701-50 is a suitable candidate, as this material is glass rovings that are tightly stitched to an unwoven mat. This material was selected for its stiffness and potential to resist deformation under pressure.

### Example 10

The same components as in Example 6 (minimum loading due to resin pickup from mat) were used, except KT CM1701-50 glass was used to form the melamine pre-preg. Herein, the minimum loading was restricted to 45% due to the glass structure. This produced a panel with laminates that have excellent adhesion to each other and to the substrate, with the print-through successfully hidden.

### Example 11

The same components as in Example 10 were used, except a 1.4 mole ratio was used in the melamine pre-preg, containing dicyandiamide. This produced panels with laminates that have excellent adhesion to each other and to the structure, with the print-through successfully hidden.

### Example 12

The same components as in Example 10 were used, except an unmodified resin of 1.8 mole ratio was used. This produced panels with laminates that have excellent adhesion to each other and to the structure, with the print-through successfully hidden.

Accordingly, the panels of the present invention comply with the requirements of the Federal Aviation Administration, with respect to heat release and smoke generation in response to radiated heat, e.g., fire, while simultaneously providing a non-porous surface which may be used in transportation vehicles. Furthermore, the addition of decorative elements, such as thin, non-woven fibrous sheets, colorants or other decorative agents in the melamine resin, do not significantly sacrifice the superior smoke and fire resistant properties of the panels of the invention.

## Claims

1. A lightweight, smoke and fire resistant panel for use in a transportation vehicle comprising:
a structural member, having a first side and a second side,
a phenolic resin, on the first side of the structural member, and
a melamine resin co-cured to the phenolic resin,
**characterised in that** the structural member is a honeycomb.

2. The panel of claim 1, wherein the structural member is adjacent to the phenolic resin, and the phenolic resin adjacent to the melamine resin.

3. The panel of any of the preceding claims, further comprising a decorative element disposed within the melamine resin.

4. The panel of any of the preceding claims, wherein the phenolic resin is selected from the group consisting of
(1) a resole, having a formaldehyde to phenol ratio of at least 1;
(2) a novolac,
(3) a resole-novolac blend, and
(4) phenol-melamine-formaldehyde (PMF) resin.

5. The panel of any of the preceding claims, wherein the melamine resin comprises at least one additive, selected from the group consisting of wetting agents, flow modifiers, internal release agents, acids, acrylic emulsions and coloring agents.

6. The panel of any of the preceding claims, wherein the melamine resin comprises at least one modifier, selected from the group consisting of dicyandiamide and caprolactam.

7. The panel of any of the preceding claims, wherein the melamine resin has a formaldehyde to melamine mole ratio of approximately 1.25-2. 5.

8. The panel of claim 7, wherein the melamine resin has a formaldehyde to melamine mole ratio of approximately 1.4-1. 8.

9. The panel of claim 7, wherein the melamine resin has a formaldehyde to melamine mole ratio of approximately 1.7.

10. The panel of any of the preceding claims, wherein the melamine resin and the phenolic resin comprise an inseparable panel.

11. The panel of any of the preceding claims, further comprising a second phenolic resin on the second side of the structural member.

12. The panel of claim 11, further comprising a second melamine resin co- cured to the second phenolic resin.

13. The panel of any of the preceding claims, further comprising a glass member adjacent to the co-cured melamine resin.

14. The panel of claim 13, wherein the glass member is selected from the group consisting of 7781 glass, 120 glass C5460 and KT CM1701-50.

15. The panel of any of the preceding claims, wherein the melamine resin comprises a colorant in a dispersion.

16. The panel of claim 15, wherein the dispersion is an at least 70% dispersion of titanium dioxide in water.

17. The panel of any of the preceding claims, wherein a panel having a 0.5 inch average thickness exhibits a peak heat release of less than 37 km/m² over a period of less than 23 seconds and a total heat release within the first two minutes of less than 35 km/m².

18. A method of forming a lightweight, smoke and fire resistant panel for use in a transportation vehicle comprising:
providing a structural member, having a first side and a second side,
applying an at least partially uncured phenolic resin to the first side of the structural member,
applying an at least partially uncured melamine resin to the phenolic resin, and
co-curing the phenolic resin and the melamine resin,
**characterised in that** the structural member is a honeycomb.

19. The method of claim 18, wherein at least one of the melamine resin and the phenolic resin are provided in a B-stage.

20. The method of either claim 18 or claim 19, wherein at least one of the melamine resin and the phenolic resin are formed into a fiber reinforced plastic prior to the respective applications.

21. The method of any of claims 18 to 20, wherein the melamine resin is provided with a decorative sheet inside or adjacent to the melamine resin.

22. The method of any of claims 18 to 21, further comprising one of:
(1) applying a second at least partially uncured phenolic resin to the second side of the structural member,
applying a second at least partially uncured melamine resin to the second phenolic resin, and
co-curing the second phenolic resin and the second melamine resin; and
(2) applying a second at least partially uncured phenolic resin to the second side of the structural member and curing the second phenolic resin.

23. The method of any of claims 18 to 22, further comprising including a glass member with the melamine resin.

24. The method of any of claims 18 to 23, further comprising adding a colorant dispersion to the melamine resin prior to the co-curing step.

## Patentansprüche

1. Leichte, rauch- und feuerbeständige Platte zur Verwendung in einem Transportfahrzeug, die Folgendes umfasst:
ein Strukturelement mit einer ersten Seite und einer zweiten Seite,
ein Phenolharz auf der ersten Seite des Strukturelements und
ein mit dem Phenolharz covernetztes Melaminharz, **dadurch gekennzeichnet, dass** das Strukturelement eine Wabe ist.

2. Platte nach Anspruch 1, wobei das Strukturelement neben dem Phenolharz liegt und das Phenolharz neben dem Melaminharz liegt.

3. Platte nach einem der vorherigen Ansprüche, die ferner ein dekoratives Teil umfasst, das sich innerhalb des Melaminharzes befindet.

4. Platte nach einem der vorherigen Ansprüche, wobei das Phenolharz ausgewählt ist aus der Gruppe bestehend aus
(1) einem Resol mit einem Verhältnis zwischen Formaldehyd und Phenol von wenigstens 1;
(2) einem Novolak,
(3) einem Resol-Novolak-Gemisch und
(4) Phenol-Melamin-Formaldehyd-(PMF)-Harz.

5. Platte nach einem der vorherigen Ansprüche, wobei das Melaminharz wenigstens einen Zusatzstoff umfasst, der ausgewählt ist aus der Gruppe bestehend aus Benetzungsmitteln, Fließmodifizierern, inneren Trennmitteln, Säuren, Acrylemulsionen und Färbemitteln.

6. Platte nach einem der vorherigen Ansprüche, wobei das Melaminharz wenigstens einen Modifizierer umfasst, der ausgewählt ist aus der Gruppe bestehend aus Dicyandiamid und Caprolactam.

7. Platte nach einem der vorherigen Ansprüche, wobei das Melaminharz ein Molverhältnis zwischen Formaldehyd und Melamin von etwa 1,25 - 2,5 hat.

8. Platte nach Anspruch 7, wobei das Melaminharz ein Molverhältnis zwischen Formaldehyd und Melamin von etwa 1,4 - 1,8 hat.

9. Platte nach Anspruch 7, wobei das Melaminharz ein Molverhältnis zwischen Formaldehyd und Melamin von etwa 1,7 hat.

10. Platte nach einem der vorherigen Ansprüche, wobei das Melaminharz und das Phenolharz eine untrennbare Platte bilden.

11. Platte nach einem der vorherigen Ansprüche, die ferner ein zweites Phenolharz auf der zweiten Seite des Strukturelements umfasst.

12. Platte nach Anspruch 11, die ferner ein zweites Melaminharz umfasst, das mit dem zweiten Phenolharz covernetzt ist.

13. Platte nach einem der vorherigen Ansprüche, die ferner ein Glaselement neben dem covernetzten Melaminharz umfasst.

14. Platte nach Anspruch 13, wobei das Glaselement ausgewählt ist aus der Gruppe bestehend aus 7781 Glas, 120 Glas C5460 und KT CM1701-50.

15. Platte nach einem der vorherigen Ansprüche, wobei das Melaminharz ein Färbemittel in einer Dispersion umfasst.

16. Platte nach Anspruch 15, wobei die Dispersion eine wenigstens 70%ige Dispersion von Titandioxid in Wasser ist.

17. Platte nach einem der vorherigen Ansprüche, wobei eine Platte mit einer durchschnittlichen Dicke von 0,5 Zoll eine maximale Wärmefreisetzung von weniger als 37 km/m² über einen Zeitraum von weniger als 23 Sekunden und eine Gesamtwärmefreisetzung innerhalb der ersten zwei Minuten von weniger als 35 km/m² aufweist.

18. Verfahren zur Herstellung einer leichten, rauch- und feuerbeständigen Platte zur Verwendung in einem Transportfahrzeug, das die folgenden Schritte beinhaltet:
Bereitstellen eines Strukturelements mit einer ersten Seite und einer zweiten Seite,
Aufbringen von wenigstens teilweise unvernetztem Phenolharz auf die erste Seite des Strukturelements,
Aufbringen von wenigstens teilweise unvernetztem Melaminharz auf das Phenolharz und
Covernetzen von Phenolharz und Melaminharz,
**dadurch gekennzeichnet, dass** das Strukturelement eine Wabe ist.

19. Verfahren nach Anspruch 18, wobei das Melaminharz und/oder das Phenolharz in einer B-Stufe bereitgestellt werden.

20. Verfahren nach Anspruch 18 oder Anspruch 19, wobei das Melaminharz und/oder das Phenolharz zu einem faserverstärkten Kunststoff vor den jeweiligen Anwendungen geformt wird.

21. Verfahren nach einem der Ansprüche 18 bis 20, wobei das Melaminharz mit einer dekorativen Lage versehen wird, und zwar innerhalb des oder neben dem Melaminharz(es).

22. Verfahren nach einem der Ansprüche 18 bis 21, das ferner einen der folgenden Schritt beinhaltet:
(1) Aufbringen eines zweiten, wenigstens teilweise unvernetzten Phenolharzes auf die zweite Seite des Strukturelements,
Aufbringen eines zweiten, wenigstens teilweise unvernetzten Melaminharzes auf das zweite Phenolharz und
Covernetzen des zweiten Phenolharzes und des zweiten Melaminharzes; oder
(2) Aufbringen eines zweiten, wenigstens teilweise unvernetzten Phenolharzes auf die zweite Seite des Strukturelements und Vernetzen des zweiten Phenolharzes.

23. Verfahren nach einem der Ansprüche 18 bis 22, das ferner das Integrieren eines Glaselements mit dem Melaminharz umfasst.

24. Verfahren nach einem der Ansprüche 18 bis 23, das ferner das Hinzufügen einer Färbemitteldispersion zum Melaminharz vor dem Covernetzungsschritt beinhaltet.

## Revendications

1. Panneau léger, résistant aux flammes et à la fumée, prévu pour l'utilisation dans un véhicule de transport et qui comprend :
un élément structural ayant un premier côté et un second côté,
une résine phénolique, sur le premier côté de l'élément structural, et
une résine de mélamine copolymérisée avec la résine phénolique,
**caractérisé en ce que** l'élément structural est un nid d'abeilles.

2. Panneau selon la revendication 1, dans lequel l'élément structural est adjacent à la résine phénolique, et la résine phénolique est adjacente à la résine de mélamine.

3. Panneau selon l'une quelconque des revendications précédentes, qui comprend de plus un élément décoratif disposé à l'intérieur de la résine de mélamine.

4. Panneau selon l'une quelconque des revendications précédentes, dans lequel la résine phénolique est sélectionnée parmi le groupe qui comprend
(1) un résol ayant un rapport formaldéhyde/phénol minimum de 1 ;
(2) une novolaque ;
(3) un mélange résol-novolaque, et
(4) une résine PMF (phénol-mélamine-formaldéhyde).

5. Panneau selon l'une quelconque des revendications précédentes, dans lequel la résine de mélamine comprend au moins un additif sélectionné parmi le groupe comprenant : agents mouillants, régulateurs de fluidité, agents antiadhérents internes, acides, émulsions acryliques et colorants.

6. Panneau selon l'une quelconque des revendications précédentes, dans lequel la résine de mélamine comprend au moins un régulateur sélectionné parmi le groupe qui comprend le dicyandiamide et le caprolactame.

7. Panneau selon l'une quelconque des revendications précédentes, dans lequel la résine de mélamine a un rapport molaire formaldéhyde/mélamine approximatif de 1,25 à 2,5.

8. Panneau selon la revendication 7, dans lequel la résine de mélamine a un rapport molaire formaldéhyde/mélamine approximatif de 1,4 à 1,8.

9. Panneau selon la revendication 7, dans lequel la résine de mélamine a un rapport molaire formaldéhyde/mélamine approximatif de 1,7.

10. Panneau selon l'une quelconque des revendications précédentes, dans lequel la résine de mélamine et la résine phénolique constituent un panneau à structure unitaire.

11. Panneau selon l'une quelconque des revendications précédentes, qui comprend de plus une seconde résine phénolique sur le second côté de l'élément structural.

12. Panneau selon la revendication 11, qui comprend de plus une seconde résine de mélamine copolymérisée avec la seconde résine phénolique.

13. Panneau selon l'une quelconque des revendications précédentes, qui comprend de plus un élément en verre adjacent à la résine de mélamine copolymérisée.

14. Panneau selon la revendication 13, dans lequel l'élément en verre est sélectionné parmi le groupe qui comprend : verre 7781, verre 120 C5460 et KT CM1701-50.

15. Panneau selon l'une quelconque des revendications précédentes, dans lequel la résine de mélamine comprend un colorant en dispersion.

16. Panneau selon la revendication 15, dans lequel la dispersion est une dispersion minimum de 70% de blanc de titane dans l'eau.

17. Panneau selon l'une quelconque des revendications précédentes, dans lequel un panneau ayant une épaisseur moyenne de 0,5 pouce (12,7 mm) présente une libération de chaleur au pic inférieure à 37 km/m² pendant une période de moins de 23 secondes, et une libération totale de chaleur (THR) inférieure à 35 km/m² pendant les deux premières minutes.

18. Procédé de fabrication d'un panneau léger, résistant aux flammes et à la fumée, prévu pour l'utilisation dans un véhicule de transport, et qui comprend :
production d'un élément structural ayant un premier côté et un second côté,
application, sur le premier côté de l'élément structural, d'une résine phénolique au moins partiellement non polymérisée,
application, sur la résine phénolique, d'une résine de mélamine au moins partiellement non polymérisée, et
copolymérisation de la résine phénolique et de la résine de mélamine,
**caractérisé en ce que** l'élément structural est un nid d'abeilles.

19. Procédé selon la revendication 18, selon lequel au moins la résine de mélamine ou la résine phénolique est fournie à l'état B.

20. Procédé selon la revendication 18 ou la revendication 19, selon lequel au moins la résine de mélamine ou la résine phénolique est formée en une matière plastique renforcée fibre avant ses applications respectives.

21. Procédé selon l'un quelconque des revendications 18 à 20, selon lequel la résine de mélamine est pourvue d'une feuille décorative placée à l'intérieur de la résine ou adjacente à celle-ci.

22. Procédé selon l'une quelconque des revendications 18 à 21, qui comprend de plus l'une des étapes suivantes :
(1) application, sur le second côté de l'élément structural, d'une seconde résine phénolique au moins partiellement non polymérisée,
application, sur la seconde résine phénolique, d'une seconde résine de mélamine au moins partiellement non polymérisée, et
copolymérisation de la seconde résine phénolique et de la seconde résine de mélamine ; et
(2) application, sur le second côté de l'élément structural, d'une seconde résine phénolique au moins partiellement non polymérisée et polymérisation de la seconde résine phénolique.

23. Procédé selon l'une quelconque des revendications 18 à 22, qui comprend de plus l'inclusion d'un élément en verre avec la résine de mélamine.

24. Procédé selon l'une quelconque des revendications 18 à 23, qui comprend de plus l'ajout d'une dispersion colorante dans la résine de mélamine avant l'étape de copolymérisation.
